# EUROPEAN PATENT SPECIFICATION

(11) **EP 3 044 371 B1**
(45) Date of publication and mention of the grant of the patent: **21.07.2021**
(21) Application number: 14843602.5
(22) Date of filing: 10.09.2014
(51) Int. Cl.: D21H 27/38, D21H 11/04, D21H 11/08, D21H 17/44, B32B 29/00

(54) **MULTIPLY PAPERBOARD**
MEHRLAGIGE PAPPE
CARTON MULTICOUCHE

(30) Priority: 13.09.2013 SE 1300595
(43) Date of publication of application: 20.07.2016
(73) Proprietor: Stora Enso Oyj, 00101 Helsinki (FI)
(72) Inventor: HALLGREN, Hans, S-16854 Bromma (SE); PENG, Frank, S-66341 Hammarö (SE)
(74) Representative: Steinrud, Henrik
(86) International application number: PCT/IB2014/064386
(87) International publication number: WO 2015/036930

(56) References cited:
- WO-A1-2006/084883
- WO-A1-2006/084883
- WO-A1-2008/031921
- WO-A1-2008/031921
- US-A- 4 486 267
- US-A1- 2006 065 379
- US-A1- 2007 137 815
- US-B1- 8 801 899
- Mária Fiserová ET AL: "RELATIONSHIP BETWEEN FIBRE CHARACTERISTICS AND TENSILE STRENGTH OF HARDWOOD AND SOFTWOOD KRAFT PULPS", CELLULOSE CHEMISTRY AND TECHNOLOGY Cellulose Chem. Technol, 1 January 2010 (2010-01-01), pages 7-8, XP055326672, Retrieved from the Internet: URL:http://www.cellulosechemtechnol.ro/pdf /CCT44,7-8(2010)/p.249-253.pdf
- None

## Description

A multi-ply paperboard comprising chemical and mechanical pulp of cellulosic fibers.

### Technical field

There are a large number of applications for the use of paperboard. All these applications have their own specific requirements on the paperboard, thus the properties of the paperboard must differ depending on the intended end use.

Paperboard which is to be converted (e.g. coated, printed, cut, creased and folded) to packages on fast running automatic machines must have the required strength to withstand the strain and stress created during the converting. The Paperboard must also have a high bending resistance, not only to achieve good runnability during converting, but also crucial for the required package performance. For long shelf-life products the package must also have good barrier properties against light, oxygen and moisture. Also properties such as flatness and dimensional stability are important during converting.

The highest quality paperboard available is made entirely of chemical pulp, e.g. SBS (solid bleached sulphate). Such paperboard has a very good appearance however needs to have a high grammage in order to give required bending resistance. This kind of solid paperboard is commonly used for packaging of e.g. cigarettes or bottle of liquors. However, packages made from this kind of paperboard are less cost-efficient due to the higher material costs. Not all applications need this extraordinary quality, and thus other paperboard types with different qualities have been developed.

A paperboard generally comprises 1-5 plies (layers). A paperboard that is to be converted usually comprises more than one ply. A multi-ply paperboard usually shows higher bending resistance index than a single-ply paperboard. A paperboard which consists of three or more plies comprises top and back plies and one or more middle plies.

Chemical pulp is often times used in the top and back plies of the board to provide the board with strength and good printing properties. In the art, the top and back plies usually comprise a large amount of softwood fibers, since this is believed to contribute to an increased strength and bending resistance. Fibers from softwood are longer than fibers from hard wood and thus, provide better internal bonding that the shorter fibers of hardwood.

The middle ply of the board may contain both mechanical pulp and/or chemical pulp. Mechanical pulp, such as CTMP, is a desirable raw material since it has low comparative density and can be produced to a lower cost than chemical pulp. Also, mechanical pulp has a higher yield and thus a higher efficiency of raw material usage. In high quality boards, softwood CTMP is the most common mechanical pulp used for the middle ply because softwood CTMP, in addition to high bulk, also has long fibers that can provide good internal bonding. Chemical pulp is normally also used in the middle ply in combination with mechanical pulp, as reinforcement, due to its high strength properties.

Because of its ability to combine high bulk and high internal bonding, softwood CTMP is a major raw material in the production of high quality paperboard. Unfortunately, high quality softwood is available only in a limited part of the world and the softwood CTMP supply available for the production of paperboard is not sufficient in relation to the need of high quality paperboard worldwide. In the art, attempts to increase the amount of hardwood in the paperboard have been done.

Patent specification WO2006084883 discloses a high quality paperboard with a middle ply comprising a high amount of hardwood CTMP. However, the middle ply also comprises a small amount of softwood pulp and, moreover, the outer plies comprises softwood pulp.

US20070137815A1 discloses a low density, multiply paperboard, wherein at least one of the plies contains both regular chemical bleached, semi-bleached or unbleached pulp fibers and bulky fibers.

WO2008031921A1 discloses a method of manufacturing a multilayer fibrous product comprising screening of short stock to prepare at least two fibre fractions, which fractions are included in different layers of the product. The method aims to make use of hardwood chemical fibers more effectively.

Patent specification US2005257909 relates to a board comprising substances which reduces undesirable smell. One example mentions use of a furnish comprising 70% bleached hardwood pulp to produce the plies.

However, the prevailing assumption of today is that a certain amount of softwood pulp is needed in the manufacturing of high quality paperboard in order to achieve an acceptable internal strength and bending resistance.

### Summary of the invention

The present invention discloses a multi-ply high quality paperboard comprising chemical and mechanical pulp of cellulosic fibers, wherein 100% of the total fiber content of said paperboard are hardwood fibers and wherein the fibers have not been fractionized. Contrary to prevailing assumptions, it has surprisingly been found that it is possible to produce a multi-ply paperboard of 100% hardwood pulp with a comparable strength, a higher bulk and a higher bending resistance as compared to a multi-ply paperboard comprising softwood pulp. The use of 100% hardwood pulp is economically favorable, since the access to softwood pulp is limited in large parts of the world. Moreover, a high amount of hardwood pulp in the paperboard improves the surface properties and the optical properties of the board.

The paperboard according to the invention may exhibit a Scott Bond value of at least 100 J/m², and a bending resistance index of at least 5 Nm⁶/kg³. Thus, the strength properties of the paperboard are comparable to those of a conventional paperboard, partly comprising softwood fibers.

Preferably, the multi-ply paperboard comprises 30 - 70 % by weight of hardwood CTMP and the remaining percentage of hardwood chemical pulp, preferably kraft pulp, all percentages calculated on the total fiber weight of said paper board. This gives rise to a high quality paperboard with high strength, good protective properties and high appearance.

The paperboard may comprise a top ply, a back ply and at least one middle ply arranged between said top ply and said back ply.

Preferably, the top and back plies comprises more than 90%, or more than 95%, or even 100 %, by weight of hardwood chemical pulp, calculated on the total fiber weight of said top and black plies. The high amount of hardwood chemical pulp in the top and back plies contributes to good strength and brightness properties.

The middle ply may comprise 80 % by weight hardwood CTMP and 20 % by weight hardwood kraft pulp, calculated on the total fiber weight of said middle ply.

In one preferred embodiment of the invention, the back ply is made of 100% unbleached hardwood pulp. It has been shown that the tensile stiffness of unbleached hardwood pulp is significantly higher than the tensile stiffness of bleached hardwood pulp. Thus, the tensile stiffness of unbleached hardwood pulp is approximately the same as bleached softwood pulp. Traditionally, a high amount of bleached softwood pulp is used in the back ply of paperboard products, such as paperboard products for use in liquid packaging or food packaging. However, it has been found that when instead using unbleached hardwood pulp in the back ply, the strength properties are enhanced whereby a board product made from 100% hardwood pulp with acceptable strength properties may be produced.

At least one of the plies, preferably the middle ply, of the inventive paperboard may comprise dry strength additives, such as starch and/or carboxymethyl cellulose (CMC) and/or nanofibrillated or microfibrillated polysaccharide. This enhances the strength properties of the paperboard and enables the use of hardwood fibers to 100%. In one preferred embodiment, at least one ply comprises at least one cationic polymer, such as cationic starch, and at least one anionic polymer, such as anionic CMC. Said cationic and anionic polymers may added to the furnish forming said ply in consecutive steps. This improves the strength of the resulting board product even further.

### Detailed description of the invention

The paperboard of the current invention is a high quality paperboard suitable for use as, e.g., a liquid packaging paperboard, food service board, graphical paperboard or cigarette paperboard.

A high quality paperboard is a paperboard with high strength, in order to be able to withstand converting, good protective properties as well as high appearance.

The paperboard of the invention comprises chemical pulp, e.g. kraft pulp, and mechanical pulp, e.g. Groundwood, CTMP (chemithermomechanical pulp) or TMP (thermomechanical pulp). The hardwood pulp used in accordance with the invention can, e.g, be eucalyptus, aspen and birch. Preferably, the hardwood pulp is eucalyptus, since eucalyptus is especially suitable as eco-friendly plantation wood and widely available in regions where softwood fiber resources are scares.

Preferably, the multi-ply paperboard of the invention comprises three plies; a top ply, a back ply and at least one middle ply. The paperboard may comprise further plies, arranged between said outer plies and said middle ply. These intermediate plies may have the same or different fiber composition as the middle ply. The paperboard may for example comprise four or five plies in total.

The fibers used in the multi-ply paperboard of the invention have not been fractionized, i.e. each ply comprises both fines and longer fibers. Each ply of the multi-ply paperboard may comprise fibers of the same size-distribution, e.g. the top ply, the middle ply and the back ply may comprise fibers with substantially the same size-distribution.

The top ply is preferably made of hardwood, chemical pulp, which gives the product good strength and printing properties. The middle ply preferably comprises a large amount of hardwood CTMP, which provides the paperboard with high bulk without any substantial decrease in strength of the final paperboard product. The back ply may also be made of hardwood chemical pulp. In one preferred mode, the back ply is made of unbleached hardwood chemical pulp, which has been shown to give increased strength and enhanced optical barrier properties. In one mode, the paperboard is a three-ply paperboard wherein the top ply comprises hardwood chemical pulp to 100%, the back ply comprises unbleached hardwood chemical pulp to 100% and the middle ply comprises 80% hardwood CTMP and 20 % hardwood kraft pulp.

Surprisingly it has been shown that it is possible to produce a paperboard comprising 100% hardwood pulp, which paperboard exhibits a Scott Bond value of at least 100 J/m², or at least 150 J/m² or even of at least 200 J/m² and a bending resistance index of at least 5 Nm⁶/kg³ or even of at least 10 Nm⁶/kg³. The paperboard of the invention may further exhibit a z-strength of at least 200 kPa or even at least 300kPa or at least 400kPa.

The inventive paperboard may also comprise dry strength additives. The dry strength additives that may be used include, but are not limited to; starch, polyacrylamide, carboxymethyl cellulose (CMC) and/or nanofibrillated polysaccharide. Nanofibrillated polysaccharide shall in this context include bacterial cellulose or nanocellulose spun with either traditional spinning techniques or with electrostatic spinning. Also microfibrillated cellulose (MFC), also known as nanocellulose, cellulose whiskers, microcrystalline cellulose (MCC), nanocrystalline cellulose (NCC) or regenerated cellulose fibers and particles are herein included in the definition of nanofibrillated polysaccharide.

In one embodiment, one of the plies, preferably the middle ply, comprises cationic starch and anionic CMC. Cationic starch and anionic CMC may be added to one of the plies, preferably the middle ply, in consecutive step. This may e.g. be accomplished in accordance with the methods disclosed in WO2006120235 or WO2006041401. This has been shown to increase the strength properties of the resultant paperboard product even further. Preferably, the middle ply comprises cationic starch to an amount of at least 10 kg/ton, or preferably at least 15 kg/ton, and CMC to an amount of at least 0,5 kg/ton or 0,8 kg/ton.

### Measurement and evaluation methods

The following methods and standards apply both to the definitions of the appended claims and to the measurements performed in the example below.
Tensile Index: ISO 1924-3:2005
Tear index: ISO 1974:1990
SCT Index: ISO 9895:2008
Scott Bond: TAPPI UM-403
Z-strength: SCAN-P 80:98
Bending resistance Index: ISO 2493-1:2010 Constant rate of deflection. The bending resistance index (GM) presented in the appended claims and in the measurements performed in the example below refers to the geometric mean value (GM) of the bending resistance index in the machine direction and the bending resistance index cross the machine direction. Formation Index: measured according to AMBERTEC Beta Formation Tester
Roughness Bendtsen: SCAN-P84:02
Air resistance Gurley L&W: SCAN P26:78
Density (paperboards, sample 1 - 5, table 2): ISO 534:2011 Transmittance: ISO 22891:2013, without the use of a 420 nm cut-off filter.
Drainage resistance: SCAN M3:65
Strain at failure: ISO 1924-3:2005
Tensile energy abs. index: ISO 1924-3:2005
Tensile stiffness index ISO 1924-3:2005
Density (pulp sheet density, table 1): ISO 534:2005

### Example

In order to evaluate the high quality paperboard of the invention, a test series was performed in which paperboards comprising 100% of hardwood pulp of different compositions were compared with a conventional paperboard comprising softwood pulp. All paperboards in the test were of a three-ply construction, having top and back plies and a middle ply.

Strength, surface and optical properties of the different paperboards were investigated. All tests were performed according to the methods and standards as indicated above and all analyses were carried out according to available standards after conditioning at 23°C, 50%RH.

### Paperboard Samples

Five three-ply paperboards were produced using an Automatic Dymanic Sheet Former (Formette Dynamique), each having top and back plies and a middle ply. The basis weight of the paperboards was approximately 185 gsm with the weight split: top-middle-back = 40-110-35 gsm.

The properties of the pulps used in the paperboard samples are shown in table 1.

**Table 1**

| | **UBHKP** | **BHKP** | **BSKP** | **CTMP** |
|---|---|---|---|---|
| Drainage resistance (°SR) | 34,8 | 30,1 | 30,7 | 37,1 |
| Density (kg/m3) | 713 | 737 | 748 | 336,6 |
| Tensile index (Nm/g) | 92,7 | 72,0 | 78,0 | 18,9 |
| Strain at break (%) | 3,87 | 4,07 | 4,00 | 1,12 |
| Tensile energy abs. index (J/g) | 2,43 | 2,03 | 2,11 | 0,15 |
| Tensile stiffness index (kNm/g) | 8,66 | 7,02 | 7,35 | 3,07 |

| | | | | |
|---|---|---|---|---|
| UBHK = Unbleached Hardwood Kraft Pulp of Eucalyptus SR°35 BHKP = Bleached Hardwood Kraft Pulp of Eucalyptus SR° 31 BSKP = Bleached Softwood Kraft Pulp of spruce/pine SR° 30 CTMP = Chemi-thermomechanical hardwood pulp of Eucalyptus | | | | |

The compositions of the five different paperboards can be seen in Table 2.

**Table 2**

| **Sample** | | **1 (ref)** | **2** | **3** | **4** | **5** |
|---|---|---|---|---|---|---|
| Top Ply | BSKP[%] | 33 | 0 | 0 | 0 | 0 |
| | BHKP[%] | 67 | 100 | 100 | 100 | 100 |
| Middle Ply | CTMP[%] | 60 | 60 | 60 | 60 | 60 |
| | BSKP[%] | 25 | 0 | 0 | 0 | 0 |
| | BHKP[%] | 15 | 40 | 40 | 12 | 40 |
| | UBHK[%] | 0 | 0 | 0 | 28 | 0 |
| Back Ply | BSKP[%] | 33 | 0 | 0 | 0 | 0 |
| | BHKP[%] | 67 | 100 | 100 | 100 | 0 |
| | UBHK[%] | 0 | 0 | 0 | 0 | 100 |

Cationic starch and/or anionic carboxymethyl cellulose (CMC) were added to the furnishes forming the plies. Table 3 shows the content of starch and/or CMC in the different plies. The furnishes forming the middle plies of paperboard sample 3 and 4 were treated with cationic starch and anionic CMC in two consecutive steps;

**Table 3**

| **Sample** | | **1 (ref)** | **2** | **3** | **4** | **5** |
|---|---|---|---|---|---|---|
| Top Ply | Starch (kg/ton) | 4 | 4 | 4 | 4 | 4 |
| | CMC (kg/ton) | 0 | 0 | 0 | 0 | 0 |
| Middle Ply | Starch (kg/ton) | 7 | 7 | 15 | 30 | 7 |
| | CMC (kg/ton) | 0 | 0 | 0,8 | 2,3 | 0 |
| Back ply | Starch (kg/ton) | 4 | 4 | 4 | 4 | 4 |
| | CMC (kg/ton) | 0 | 0 | 0 | 0 | 0 |

Comparative tests were performed on conventional paperboards, comprising softwood pulp (reference) and paperboards comprising 100% hardwood pulp (invention). The strength properties tested were tensile index, tear index, compression strength (SCT), internal bonding (Scott Bond), bending resistance (bending resistance index) and z-strength. The tests were performed before calendaring. The strength properties of the paperboards are summarized in table 4.

**Table 4**

| **Sample** | **Tensile index GM(Nm/g)** | **Tear index GM (mNm²/ g)** | **SCT Index GM (Nm/g)** | **Scott Bond (J/m²)** | **Z-Strength (kPa)** | **Bending resist. Index 50 mm 15°GM (Nm⁶/kg³)** | **Density (kg/m³)** |
|---|---|---|---|---|---|---|---|
| 1 (ref) | 77,4 | 10,6 | 30,7 | 341 | 588 | 18,2 | 653 |
| 2 | 73,9 | 7,2 | 30,8 | 310 | 559 | 19,4 | 650 |
| 3 | 77,8 | 7,5 | 32,4 | 375 | 592 | 18,5 | 650 |
| 4 | 79,2 | 8,5 | 32,4 | 448 | 633 | 19,4 | 640 |
| 5 | 76,8 | 8,1 | 29,8 | 281 | 548 | 20,0 | 639 |

The comparison shows that the tensile and tear strength are somewhat lower for the paperboard comprising 100% hardwood fibres compared with the reference paperboard, but still well above acceptable levels. Surprisingly, both the tensile index and tear strength were improved by the addition of starch and cmc (samples 3 and 4) and by the use of unbleached hardwood pulp in the back ply (sample 5).

The internal bonding (scott-bond and z-strength) of the paperboard according to the invention is comparable to that of the reference. These values can be significantly improved by the addition of cationic starch and anionic CMC in consecutive steps (sample 3 and 4).

The short moment compression strength test (SCT) shows acceptable values for all of the paperboard samples. The compression strength can also be significantly improved by the addition of cationic starch and anionic CMC in consecutive steps (sample 3 and 4).

The bending resistance index value of the inventive paperboard is even higher than for the reference paperboard. A reason for this may be that the inventive paperboard has higher bulk than the reference paperboard.

Thus, these comparative tests show that the strength properties of paperboards made from 100% hardwood pulp can be similar or even higher compared to conventional paperboards, partly comprising softwood pulp.

Furthermore, surface and optical properties of the paperboards were tested. These properties are summarized in table 5.

**Table 5**

| **Sample** | **Formation index Ambertec Normalized Stdev. (g^{1/2}/m)** | **Roughness Bendtsen 0,1 MPa print side (ml/min)** | **Air resistance Gurley L&W (s)** | **Transmittance C/2° wire side(%)** |
|---|---|---|---|---|
| 1 | 0,301 | 1435 | 100,9 | 7,0 |
| 2 | 0,273 | 835 | 80,0 | 4,7 |
| 3 | 0,292 | 854 | 81,9 | 4,6 |
| 4 | 0,286 | 840 | 65,9 | 5,8 |
| 5 | 0,296 | 891 | 58,1 | 2,9 |

As can be seen in table 5, the paperboards of the invention show improved formation. Moreover, the inventive paperboard shows a significantly smoother board surface (roughness) and a lower air resistance. An increased amount of hardwood fibres further gives rise to improved optical barrier properties (lower transmittance). The paperboard comprising unbleached hardwood pulp in the back ply (sample 5) shows the lowest transmittance. Such good barrier properties reduce the need for barrier coatings, such as aluminium films and, consequently, the environmental carbon footprint can be lowered.

The present invention has been described with regard to preferred embodiments. However, it will be obvious to a person skilled in the art that a number of variations and modifications can be made without departing from the scope of the invention as described herein.

## Claims

1. A multi-ply, high quality paperboard comprising chemical and mechanical pulp of cellulosic fibers, wherein 100% of the total fiber content of said paperboard are hardwood fibers and wherein the fibers have not been fractionized.

2. A paperboard according to claim 1, wherein the paperboard exhibits a Scott Bond value according to Tappi UM1403 of at least 100 J/m² and a bending resistance index (GM) according to ISO 2493-1:1010, constant rate of deflection, of at least 5 Nm⁶/kg³.

3. A paperboard according to anyone of claims 1 - 2, wherein the paperboard comprises 30 - 70 % by weight of hardwood CTMP, the remaining percentage by weight of hardwood chemical pulp, all percentages calculated on the total fiber weight of said paper board

4. A paperboard according to any one of claims 1 - 3, comprising a top ply, a back ply and at least one middle ply arranged between said top ply and said back ply.

5. A paperboard according to claim 4, wherein the top and black plies comprises 95% by weight, preferably 100 % by weight, of hardwood chemical pulp, calculated on the total fiber weight of said top and black plies.

6. A paperboard according to any one of claims 4 - 5, wherein the at least one middle ply comprises 20% by weight of hardwood chemical pulp and 80% of hardwood CTMP, calculated on the total fiber weight of said middle ply.

7. A paperboard according to anyone of claims 4 - 6, wherein the back ply is made of 100% by weight of unbleached hardwood pulp.

8. A paperboard according to anyone of claims 1 - 7, wherein at least one of the plies comprises dry strength additives, such as cationic starch and/or anionic carboxymethyl cellulose (CMC) and/or nanofibrillated polysaccharide.

9. A paperboard according to claim 8, wherein at least one of the plies comprises at least one anionic polymer and at least one cationic polymer, which polymers preferably have been added to the furnish forming the ply in consecutive steps.

10. A paperboard for holding liquids **characterized in that** it is produced from the paperboard of any of the claims 1 - 9.

11. A paperboard for holding food **characterized in that** it is produced from the paperboard of any of the claims 1 - 9.

## Patentansprüche

1. Mehrlagige, hochwertige Pappe, umfassend chemischen und mechanischen Zellstoff aus cellulosischen Fasern, wobei 100 % des Gesamtfasergehalts der Pappe Hartholzfasern sind und wobei die Fasern nicht fraktioniert wurden.

2. Pappe nach Anspruch 1, wobei die Pappe einen Scott Bond-Wert für die Bindefähigkeit nach Tappi UM1403 von zumindest 100 J/m² und einen Biegewiderstandsindex (GM) nach ISO 2493-1:1010, konstante Biegungsrate, von zumindest 5 Nm⁶/kg³ aufweist.

3. Pappe nach einem der Ansprüche 1 bis 2, wobei die Pappe 30 bis 70 Gew.-% Hartholz-CTMP, der verbleibende Gewichtsprozentsatz Hartholz-Zellstoff umfasst, wobei alle Prozentsätze auf das Gesamtfasergewicht besagter Pappe berechnet sind.

4. Pappe nach einem der Ansprüche 1 bis 3, umfassend eine obere Lage, eine hintere Lage und zumindest eine mittlere Lage, die zwischen der oberen Lage und besagter hinterer Lage angeordnet ist.

5. Pappe nach Anspruch 4, wobei die obere und die hintere Lage 95 Gew.-%, vorzugsweise 100 Gew.-% Hartholzzellstoff, berechnet auf das Gesamtfasergewicht der besagten oberen und hinteren Lage, umfassen.

6. Pappe nach einem der Ansprüche 4 bis 5, wobei die zumindest eine mittlere Lage 20 Gew.-% Hartholz-Zellstoff und 80 Gew.-% Hartholz-CTMP, berechnet auf das Gesamtfasergewicht besagter mittlerer Lage, umfasst.

7. Pappe nach einem der Ansprüche 4 bis 6, wobei die hintere Lage aus 100 Gew.-% ungebleichtem Hartholz-Zellstoff hergestellt ist.

8. Pappe nach einem der Ansprüche 1 bis 7, wobei zumindest eine der Lagen Trockenfestigkeitszusätze, wie kationische Stärke und/oder anionische Carboxymethylcellulose (CMC) und/oder nanofibrilliertes Polysaccharid, umfasst.

9. Pappe nach Anspruch 8, wobei zumindest eine der Lagen zumindest ein anionisches Polymer und zumindest ein kationisches Polymer umfasst, wobei die Polymere bevorzugt dem die Lage bildenden Stoff in aufeinanderfolgenden Schritten zugesetzt wurden.

10. Pappe zur Aufnahme von Flüssigkeiten, **dadurch gekennzeichnet, dass** sie aus der Pappe nach einem der Ansprüche 1 bis 9 hergestellt ist.

11. Pappe zur Aufnahme von Nahrungsmitteln, **dadurch gekennzeichnet, dass** sie aus der Pappe nach einem der Ansprüche 1 bis 9 hergestellt ist.

## Revendications

1. Un carton multicouche de haute qualité comprenant une pâte chimique et mécanique de fibres cellulosiques, dans lequel 100 % de la teneur totale en fibres dudit carton sont des fibres de bois de feuillus et dans lequel les fibres n'ont pas été fractionnées.

2. Un carton selon la revendication 1, dans lequel le carton présente une valeur de Scott-Bond selon Tappi UM1403 d'au moins 100 J/m² et un indice de résistance à la flexion (GM) selon ISO 2493-1 :1010, à taux constant de déflexion, d'au moins 5 Nm⁶/kg³.

3. Un carton selon l'une quelconque des revendications 1 à 2, dans lequel le carton comprend 30 à 70 % en poids de CTMP de bois de feuillus, le pourcentage restant en poids de pâte chimique de bois de feuillus, tous les pourcentages étant calculés sur le poids total de fibres dudit carton.

4. Un carton selon l'une quelconque des revendications 1 à 3, comprenant une couche supérieure, une couche arrière et au moins une couche intermédiaire disposée entre ladite couche supérieure et ladite couche arrière.

5. Un carton selon la revendication 4, dans lequel les couches supérieure et arrière comprennent 95 % en poids, de préférence 100 % en poids, de pâte chimique de bois de feuillus, calculés sur le poids total des fibres desdites couches supérieure et arrière.

6. Un carton selon l'une quelconque des revendications 4 à 5, dans lequel la au moins une couche intermédiaire comprend 20 % en poids de pâte chimique de bois de feuillus et 80 % de CTMP de bois de feuillus, calculés sur le poids total des fibres de ladite couche intermédiaire.

7. Un carton selon l'une quelconque des revendications 4 à 6, dans lequel la couche arrière est constituée de 100 % en poids de pâte de bois de feuillus non blanchie.

8. Un carton selon l'une quelconque des revendications 1 à 7, dans lequel au moins une des couches comprend des additifs de résistance à sec, tels que de l'amidon cationique et/ou de la carboxyméthylcellulose anionique (CMC) et/ou un polysaccharide nanofibrillé.

9. Un carton selon la revendication 8, dans lequel au moins une des couches comprend au moins un polymère anionique et au moins un polymère cationique, lesquels polymères ont de préférence été ajoutés à la composition formant la couche dans des étapes consécutives.

10. Un carton destiné à contenir des liquides, **caractérisé en ce qu'**il est produit à partir du carton selon l'une quelconque des revendications 1 à 9.

11. Un carton destiné à contenir des aliments, **caractérisé en ce qu'**il est produit à partir du carton selon l'une quelconque des revendications 1 à 9.
